# EUROPEAN PATENT APPLICATION

(11) **EP 4 459 251 A1**
(43) Date of publication of application: **06.11.2024**
(21) Application number: 22914394.6
(22) Date of filing: 20.12.2022
(51) Int. Cl.: G01K 1/14, G01K 1/16, G01K 7/22

(54) **TEMPERATURE-MEASUREMENT TERMINAL STRUCTURE**

(30) Priority: 27.12.2021 CN 202123312383 U
(71) Applicant: Changchun Jetty Automotive Technology Co., Ltd., Changchun City, Jilin Province 130000 (CN)
(72) Inventor: WANG, Chao, Changchun, Jilin 130000 (CN)
(74) Representative: Dehns
(86) International application number: PCT/CN2022/140299
(87) International publication number: WO 2023/125140

(57) **Abstract**

The present disclosure discloses a temperature-measurement terminal structure, which belongs to the technical field of the manufacturing of electric energy transmission devices, including a terminal (1) and a temperature sensor (2). The terminal (1) includes an embedding groove (11) with an inner contact surface (111). The temperature sensor (2) is at least partially disposed in the embedding groove (11) and has a temperature measurement surface (21) attached to the inner contact surface (111). In the present disclosure, by disposing the temperature sensor in the groove, the temperature sensor can be more firmly attached to the terminal, so that the temperature signal collected by the temperature sensor is closer to the actual temperature change, with small error. By connecting the plugging member with the temperature sensor, the temperature sensor can be conveniently installed before being connected to a wire, so as to meet the requirements of complicated installation environments.

## Description

The present disclosure claims priority to Chinese Patent Application No. 202123312383.0, entitled "temperature-measurement terminal structure", and filed on December 27, 2021, which is hereby incorporated by reference in its entirety.

### TECHNICAL FIELD

The present disclosure relates to the technical field of the manufacturing of electric energy transmission devices, and particularly to a temperature-measurement terminal structure.

### BACKGROUND

With the rapid development of the new energy technologies, the number of the new energy automobiles is also increasing. At present, both a charging gun head and a charging socket of a new energy automobile have charging terminals of plugged structure. When the automobile is charged, the current at the charging terminals increases rapidly, resulting in a sharp rise in heat generation. Thus, for the sake of safety, many manufacturers provide temperature measurement devices at the charging terminals. There are many ways to measure temperature, for example, measure temperature ways can be divided into two categories, i.e., contact temperature measurement and non-contact temperature measurement, based on whether a measuring body is in contact with a measured medium. The non-contact temperature measurement has a wide temperature measurement range because the temperature measurement element is not in contact with the measured medium, and the upper limit of temperature measurement is not limited in principle. However, the non-contact temperature measurement generally has a larger error in temperature measurement due to being affected by the emissivity of the object, the distance from the measured object to the temperature measurement element, and other media such as smoke, dust, and water vapor. Moreover, in the non-contact temperature measurement, the heat is transferred by radiation, which takes a long time and has a slow speed of temperature measurement, failing to meet many occasions that require timeliness and accuracy of temperature measurement. The contact temperature measurement is simple and reliable with a high measurement accuracy. However, there are two common problems with contact temperature measurement: one is that the contact area between the temperature sensor and the terminal surface is insufficient, resulting in inconsistency between the measured temperature value and the actual temperature value; the other is that a heat conductor is often needed to be connected to both the terminal and the temperature sensor, and the temperature at the terminal is transferred to the temperature sensor through the heat conductor, during which a temperature loss inevitably occurs, resulting in an inaccurate temperature measurement, and moreover, additional space is needed to place the heat conductor. Therefore, there is an urgent need for a new solution to solve the above problems in the prior art.

### SUMMARY

The present disclosure aims to provide a temperature-measurement terminal structure, which can increase a contact area by embedding a temperature sensor on a terminal, and reduce errors of a temperature measurement by omitting a heat conductor, thereby ensuring safe charging.

It is a first aspect of the present disclosure to provide a temperature-measurement terminal structure, including a terminal and a temperature sensor. The terminal includes an embedding groove with an inner contact surface. The temperature sensor is at least partially disposed in the embedding groove, and has a temperature measurement surface attached to the inner contact surface.

The temperature sensor is provided with a plugging port for being connected to an electric transmission member.

The inner contact surface is a flat surface or a curved surface.

The terminal has a cylindrical section, the embedding groove is a circumferential groove disposed on the cylindrical section, and the temperature measurement surface is an arc surface matched with the circumferential groove.

The arc surface has a radian of 28° to 180°.

A fixing portion is further included, and the fixing portion and the temperature sensor are connected end to end to form a ring disposed in the circumferential groove.

The fixing portion is elastic.

Heat-conducting silica gel is disposed between the inner contact surface and the temperature measurement surface.

The temperature sensor is an NTC temperature sensor or a PTC temperature sensor.

A radial thickness of the temperature sensor is less than or equal to a depth of the embedding groove.

The temperature-measurement terminal structure according to the present disclosure has the following effects:
By disposing the temperature sensor in the groove, the temperature sensor can be more firmly attached to the terminal, so that the temperature signal collected by the temperature sensor is closer to the actual temperature change, with small error.

By connecting the plugging member with the temperature sensor, the temperature sensor can be conveniently installed before being connected to a wire, so as to meet the requirements of complicated installation environments.

The temperature sensor is arc-shaped and matched with the circumferential groove, so as to be conveniently mounted on the terminal. With the assistance of the fixing portion, the temperature sensor is more closely attached to the circumferential groove, and the measured temperature is closer to the real value.

The heat-conducting silica gel can assist the connection between the terminal and the temperature sensor, increase the effective contact area between the terminal and the temperature sensor, increase the adhesive force, and avoid the reduction in the effective contact area due to vibration or the reduction in the heat-conducting efficiency due to generation of an air gap.

### BRIEF DESCRIPTION OF DRAWINGS

The drawings, which are incorporated in and constitute a part of the specification, illustrate the embodiments of the present disclosure and together with the description thereof, serve to explain the principles of the present disclosure.
FIG. 1 illustrates a structural diagram of a terminal of a temperature-measurement terminal structure according to the present disclosure.
FIG. 2 illustrates a structural diagram of a temperature sensor of a temperature-measurement terminal structure according to the present disclosure.
FIG. 3 illustrates a structural diagram of a temperature-measurement terminal structure according to the present disclosure.
FIG. 4 illustrates a structural diagram of a fixing portion of a temperature-measurement terminal structure according to the present disclosure.

### Reference numerals:

1: terminal; 11: embedding groove; 111: inner contact surface; 2: temperature sensor; 21: temperature measurement surface; 22: plugging port; 3: cylindrical section; and 4: fixing portion.

### DETAILED DESCRIPTION OF EMBODIMENTS

Various exemplary embodiments of the present disclosure will now be described in detail with reference to the drawings. It should be noted that the relative arrangements, numerical expressions and values of components and steps set forth in these embodiments do not limit the scope of the present disclosure unless otherwise specified.

The following description of at least one exemplary embodiment is merely illustrative and is in no way intended to limit the present disclosure and the application or use thereof.

Techniques, methods and devices known to those of ordinary skill in the art may not be discussed in detail, but they should be regarded as part of the specification under appropriate circumstances.

In all examples illustrated and discussed here, any specific value should be interpreted as illustrative only and not as a limitation. Therefore, other examples of the exemplary embodiments may have different values.

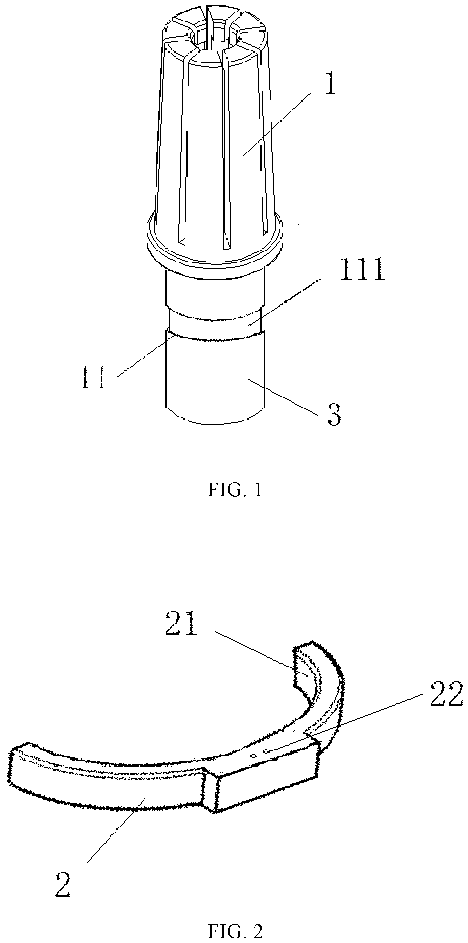

The present disclosure discloses a temperature-measurement terminal structure, as illustrated in FIGS. 1 to 4, which includes a terminal 1 and a temperature sensor 2. The terminal 1 includes an embedding groove 11 with an inner contact surface 111.

The temperature sensor 2 is at least partially disposed in the embedding groove 11, and has a temperature measurement surface 21 attached to the inner contact surface 111. According to the temperature measurement mode of the charging structure for the charging automobile in the prior art, the temperature sensor 2 is generally disposed on the surface of the terminal 1, and the temperature sensor 2 directly measures the temperature of the terminal 1. However, due to the influence of the shape of the temperature sensor 2, it is difficult for the temperature sensor 2 to have a sufficient contact area with the terminal; in addition, when the temperature is measured by means of disposing a heat conductor, the temperature measured by the temperature sensor 2 is not accurate due to the transmission and consumption of the temperature of the terminal 1. According to the solution provided by the present disclosure, the terminal 1 is provided with the embedding groove 11 in which the temperature sensor 2 is embedded, so that the temperature measurement surface 21 of the temperature sensor 2 can be fully attached to the inner contact surface 11 of the embedding groove 11, which not only omits the heat conductor but also ensures the contact area between the temperature sensor 2 and the terminal 1, so that the temperature value of the terminal 1 measured by the temperature sensor 2 is closer to the real value.

In an exemplary embodiment, as illustrated in FIG. 2, the temperature sensor 2 is provided with a plugging port 22, which is used to be connected to an electric transmission member. The electric transmission member may be a plugging member or a wire for electrically connecting the temperature sensor 2 with a control end or a detection end. Disposing the plugging port 22 on the temperature sensor 2 can facilitate the installation of the temperature sensor 2, i.e., the temperature sensor 2 can be installed on the terminal 1 before being connected to a wire, which can satisfy more complicated installation environments, and also make the wiring inside the charging socket more reasonable. The plugging port 22 may be disposed on a side surface of the terminal 1, and the plugging member or the wire may be disposed in a radial direction of the terminal 1. Alternatively, it is possible to dispose a boss on the temperature sensor 2, and dispose the plugging port 22 on the boss (e.g., a side surface of the boss), as illustrated in FIG. 2, so that the plugging member or the wire is parallel to an axial direction of the terminal 1.

In an exemplary embodiment, the inner contact surface 111 is a flat surface or a curved surface. Accordingly, when the inner contact surface 111 is a flat surface, the temperature measurement surface 21 which is attached to the inner contact surface 111 is also a flat surface, and when the inner contact surface 111 is a curved surface, the temperature measuring surface 21 attached to the inner contact surface 111 is also a curved surface. The design of curved surface can increase the contact area between the temperature sensor 2 and the terminal 1 in a limited space, so as to obtain a more accurate temperature value.

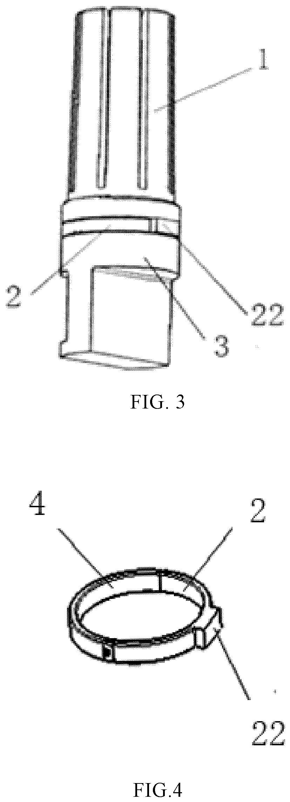

In an exemplary embodiment, as illustrated in FIG. 3, the terminal 1 has a cylindrical section 3, the embedding groove 11 is a circumferential groove disposed on the cylindrical section 3, and the temperature measurement surface 21 is an arc surface matched with the circumferential groove. Since the temperature sensor 2 is disposed in the circumferential groove, and the arc surface is curved along the circumferential groove, a more accurate temperature value can be obtained from the inner contact surface 111 attached to the circumferential groove.

### Further, the arc surface has a radian of 28° to 180°.

In the case where the radius of the temperature sensor 2 is fixed, a large radian of the arc surface means a longer length of the temperature measurement surface of the temperature sensor 2 and a small radian of the arc surface means means a small contact area between the temperature sensor 2 and the terminal 1, which leads to inaccurate measured temperature. In order to select an optimum radian, the inventor carries out relevant tests, in which the same terminals 1 are adopted, each having the same embedding groove 11 which is a circumferential groove on the cylindrical section 3, and the temperature sensors 2 with the same radius and different radians are adopted, so as to measure the temperature of the terminals 1 and obtain an absolute value of each difference between each measured temperature and the actual temperature. The absolute value greater than 0.5°Cis considered unqualified, and the results are recorded in Table 1.

**Table 1: Influence of the Radian of the Arc Surface on the Temperature Measurement Effect**

| Radian of the Arc Surface (°) | | | | | | | | | | | | | |
|---|---|---|---|---|---|---|---|---|---|---|---|---|---|
| 27 | 28 | 30 | 35 | 40 | 50 | 60 | 70 | 80 | 100 | 120 | 140 | 160 | 180 |

| Difference between the measured temperature and the actual temperature (°C) | | | | | | | | | | | | | |
|---|---|---|---|---|---|---|---|---|---|---|---|---|---|
| 0.51 | 0.5 | 0.49 | 0.45 | 0.42 | 0.38 | 0.32 | 0.28 | 0.23 | 0.19 | 0.15 | 0.11 | 0. 1 | 0 |

As can be seen from Table 1, when the radian of the arc surface is less than 28°, the temperature difference between the measured temperature and the actual temperature is greater than 0.5 °C, which is unqualified; and when the radian of the arc surface is greater than or equal to 36°, the temperature difference between the measured temperature and the actual temperature is less than 0.5 °C, which is qualified. When the radian reaches 180°, there is no difference between the measured temperature and the actual temperature. Therefore, the inventor prefers that the radian is 180°, i.e., it is ideal that the arc surface is semi-circular. However, when the radian is greater than 180°, the opening of the temperature sensor 2 is smaller than the diameter of the embedding groove 11 of the terminal 1, making it impossible to install the temperature sensor 2, so the inventor selects the radian of the arc surface to be 28° to 180°.

In an exemplary embodiment, a fixing portion 4 is further included, as illustrated in FIG. 4. The fixing portion 4 and the temperature sensor 2 are connected end to end to form a ring which can be disposed in the circumferential groove. One end of the fixing portion 4 may be hinged with the temperature sensor 2, and the other end thereof is clamped or latched with the temperature sensor 2, so that the fixing portion 4 and the temperature sensor 2 form a ring that is at least partially embedded in the circumferential groove.

In an exemplary embodiment, the fixing portion 4 is elastic. The elastic fixing portion 4 may be sleeved in the circumferential groove after two ends thereof are connected to the temperature sensor 2, making it more convenient to use.

In an exemplary embodiment, heat-conducting silica gel is disposed between the inner contact surface 111 and the temperature measurement surface 21. The heat-conducting silica gel can assist the connection between the terminal 1 and the temperature sensor 2, improve the effective contact area, increase the adhesive force, and avoid the reduction in the effective contact area due to vibration or the reduction in the heat-conducting efficiency due to generation of an air gap. Meanwhile, the filled heat-conducting silica gel can serve as a buffer between the temperature sensor 2 and the terminal 1.

In an exemplary embodiment, the temperature sensor 2 is an NTC (Negative Temperature Coefficient) temperature sensor or a PTC (Positive Temperature Coefficient) temperature sensor. The NTC temperature sensor and the PTC temperature sensor are convenient to use, have a resistance value ranging of 0.1 to 100 kΩ for arbitrary selection, are easy to be processed into complex shapes, can be mass-produced, have good stability and strong overload capacity, and are suitable for products such as adapters requiring small sizes and stable performances. The PTC sensor is more stable than the NTC sensor. A bimetal temperature sensor includes two metals with different expansion coefficients, in which the metal with a larger expansion coefficient bends when the temperature changes, so that the bimetal temperature sensor has a good vibration resistance and is suitable for electric automobiles.

In an exemplary embodiment, a radial thickness of the temperature sensor 2 is less than or equal to a depth of the embedding groove 11. In some cases, the temperature sensor 2 is embedded in the embedding groove 11. Since an area of the terminal 1 where the temperature sensor 2 is located needs to be plugged with a mating terminal, if the temperature sensor 2 protrudes from the embedding groove 11, it will affect the plugging of the terminal 1 into the mating terminal. Therefore, the radial thickness of the temperature sensor 2 is less than or equal to the depth of the embedding groove 11, so as to ensure that the temperature sensor 2 will not affect the plugging of the terminal. Meanwhile, the terminal 1 may also be provided with a recess for accommodating a plugging member or a wire connected to the plugging port 22 of the temperature sensor 2, so as to ensure that neither the temperature sensor 2 nor the electrical connector connected thereto will hinder the plugging between the terminal 1 and the mating terminal.

Although some specific embodiments of the present disclosure have been described in detail by way of examples, it should be understood by those skilled in the art that the above examples are illustrative only and are not intended to limit the scope of the present disclosure. It should be understood by those skilled in the art that the above embodiments can be modified without departing from the scope and spirit of the present disclosure. The scope of the present disclosure is defined by the appended claims.

## Claims

1. A temperature-measurement terminal structure, comprising a terminal (1) and a temperature sensor (2);
wherein the terminal (1) comprises an embedding groove (11) with an inner contact surface (111); and
the temperature sensor (2) is at least partially disposed in the embedding groove (11), and has a temperature measurement surface (21) attached to the inner contact surface (111).

2. The temperature-measurement terminal structure according to claim 1, wherein the temperature sensor (2) is provided with a plugging port (22) for being connected to an electric transmission member.

3. The temperature-measurement terminal structure according to claim 1, wherein the inner contact surface (111) is a flat surface or a curved surface.

4. The temperature-measurement terminal structure according to claim 1, wherein the terminal (1) has a cylindrical section (3), the embedding groove (11) is a circumferential groove disposed on the cylindrical section (3), and the temperature measurement surface (21) is an arc surface matched with the circumferential groove.

5. The temperature-measurement terminal structure according to claim 4, wherein the arc surface has a radian of 28° to 180°.

6. The temperature-measurement terminal structure according to claim 4, further comprising a fixing portion (4), wherein the fixing portion (4) and the temperature sensor (2) are connected end to end to form a ring disposed in the circumferential groove.

7. The temperature-measurement terminal structure according to claim 6, wherein the fixing portion (4) is elastic.

8. The temperature-measurement terminal structure according to claim 1, wherein heat-conducting silica gel is disposed between the inner contact surface (111) and the temperature measurement surface (21).

9. The temperature-measurement terminal structure according to claim 1, wherein the temperature sensor (2) is an NTC temperature sensor or a PTC temperature sensor.

10. The temperature-measurement terminal structure according to claim 1, wherein a radial thickness of the temperature sensor (2) is less than or equal to a depth of the embedding groove (11).
